# EUROPÄISCHE PATENTSCHRIFT

(11) **EP 4 052 879 B1**
(45) Veröffentlichungstag und Bekanntmachung des Hinweises auf die Patenterteilung: **27.09.2023**
(21) Anmeldenummer: 22159034.2
(22) Anmeldetag: 25.02.2022
(51) Int. Cl.: B29C 33/12, B29C 31/00, B29C 43/04, B29C 43/18, B29C 33/30, B29C 43/32, B30B 15/30, B29C 33/34, B29L 31/56, B29L 31/00, B29C 43/36

(54) **VORRICHTUNG UND VERFAHREN ZUM EINLEGEN VORGEFERTIGTER TEILE IN EIN FORMWERKZEUG EINER PRESSE SOWIE PRESSE MIT EINER SOLCHEN VORRICHTUNG**
DEVICE AND METHOD FOR INSERTING PREFABRICATED PARTS INTO A MOULD OF A PRESS AND PRESS WITH SUCH A DEVICE
APPAREIL ET PROCÉDÉ D'INSERTION DES PIÈCES PRÉFABRIQUÉES DANS UN OUTIL DE FORMAGE D'UNE PRESSE, AINSI QUE PRESSE DOTÉE D'UN TEL DISPOSITIF

(30) Priorität: 01.03.2021 DE 202021101012 U
(43) Veröffentlichungstag der Anmeldung: 07.09.2022
(73) Patentinhaber: Wickert Maschinenbau GmbH, 76829 Landau (DE)
(72) Erfinder: Schramm, Florian, 76857 Wernersberg (DE); Hertel, Stefan, 76835 Gleisweiler (DE)
(74) Vertreter: Kurz, Andreas

(56) Entgegenhaltungen:
- EP-A1- 1 020 277
- WO-A1-2018/221090
- DE-A1- 10 243 176
- DE-A1-102013 103 653

## Beschreibung

### Gebiet der Technik

Die Erfindung betrifft eine Vorrichtung zum Einlegen vorgefertigter Teile in ein Formwerkzeug einer Presse zur Herstellung von Formteilen, insbesondere Elastomerformteilen, gemäß dem Oberbegriff des Anspruchs 1, eine Presse mit einer solchen Vorrichtung gemäß dem Oberbegriff des Anspruchs 14 sowie ein dementsprechendes Verfahren gemäß dem Oberbegriff des Anspruchs 15.

### Stand der Technik

Bei der Herstellung von Formteilen in Pressen wird eine fließfähige Masse wie zum Beispiel Kautschuk oder Kunststoff in ein Formwerkzeug gepresst und durch Vulkanisation oder Abkühlen in einen formstabilen Zustand übergeführt. Nach dem Öffnen des Formwerkzeugs kann das fertige Formteil entnommen werden. Zur Erweiterung der Funktionalität kann das Formteil auch ein oder mehrere vorgefertigte Teile beinhalten, die bei der Herstellung im Formwerkzeug integraler Bestandteil des Formteils werden.

Als Beispiel seien die Verschlüsse von Ampullen für Arzneimittel genannt, die in der Regel aus einem Gummistopfen bestehen und gewährleisten, dass kein Arzneimittel aus der Ampulle dringt. Der im Ampullenhals liegende Teil des Gummistopfens stellt dabei mit seiner Stirnseite die mit Arzneimittel benetzte Fläche dar, was aufgrund chemischer Reaktionen zwischen Arzneimittel und Gummi die Gefahr der Verunreinigung des Arzneimittels birgt.

Um dem Vorzubeugen ist aus der WO 84/03682 bekannt, die mit dem Arzneimittel in Kontakt kommende Fläche des Gummistopfens mit einem chemisch inerten Material zu beschichten. Dazu wird eine Schicht aus einem Thermoplast und eine Schicht aus einem Kautschuk zwischen oberem Teil und unterem Teil eines offenen Formwerkzeugs gelegt, die Form geschlossen und Wärme zugeführt. Im Zuge der Vulkanisation des Kautschuks verbindet sich die inerte Schicht mit dem Kautschuk und wird integraler Teil des Gummistopfens.

Probleme stellen sich dann, wenn der Gummistopfen nicht nur an seiner Stirnseite beschichtet sein soll, sondern auch über einen Teil des daran anschließenden Stopfenumfangs. Besteht die inerte Schicht aus unelastischen Materialien, führt deren dreidimensionale Verformung im Formwerkzeug zur Faltenbildung und in der Folge zur mangelhaften Dichtigkeit des Verschlusses. Aus diesem Grund wird in der WO 84/03682 vorgeschlagen, dass die inerte Schicht aus einem elastischen Material bestehen soll.

Aufgrund seiner chemisch inerten Eigenschaften und thermischen Beständigkeit hat sich unter anderem Polytetrafluorethylen (PTFE) als geeignetes Material für eine Beschichtung der vom Arzneimittel benetzten Flächen eines Ampullenverschlusses erwiesen. Die Verwendung dieses Materials bei der Herstellung von elastomeren Verschlussstopfen für Arzneimittel sowie eine entsprechende Vorrichtung ist in der US 4,397,903 beschrieben. Dort werden aus einer zweilagigen Bahn mit einer chemisch inerten Schicht und einer Kautschukschicht kreisscheibenförmige Teile ausgestanzt und in einem anschließenden Schritt in lochförmige Aufnahmen einer Wechselplatte gedrückt. Eine vollständig mit Teilen bestückte Wechselplatte wird dann über die untere Form eines Formwerkzeugs gelegt, wobei die Teile über den Kavitäten der unteren Form zu liegen kommen. Mithilfe einer auf die Wechselplatte bzw. Form absenkbaren, mit Stiften besetzten Druckplatte werden dann die einzelnen Teile in die ihnen zugeordnete Kavitäten eingedrückt. Nach dem Entnehmen der Wechselplatte wird das Formwerkzeug geschlossen, Kautschuk in die Kavitäten gepresst und unter Einwirkung von Wärme zum Vulkanisieren gebracht, wobei eine stoffschlüssige Verbindung der Teile mit dem Elastomer des Formteils zustande kommt.

In sensiblen Anwendungsbereichen wie zum Beispiel der Pharmazie werden sehr hohe Anforderungen an die Qualität der fertigen Formteile gestellt. Bei den beschriebenen Ampullenverschlüssen gehört dazu neben einer absoluten Dichtigkeit des Verschlusses auch die exakte Positionierung der inerten Beschichtung am Verschluss, um Beeinträchtigungen des Arzneimittels durch chemische Reaktionen mit dem Material des Verschlusses zuverlässig ausschließen zu können.

Aus DE10243176A ist eine Vorrichtung bekannt zum Bestücken einer Kavität einer Form, insbesondere einer Gummispritzgussform, mit mindestens einem Einsatz, die mindestens eine mit einer Grundplatte verbundene Aufnahme für den Einsatz aufweist, wobei der Aufnahme ein unter Druck stehender, verschiebbarer Kolben zum Verschieben des Einsatzes aus der Aufnahme in die Kavität zugeordnet ist. Der Kolben ist in einer in der Grundplatte ausgebildeten Zylinderbohrung gelagert.

### Zusammenfassung der Erfindung

Vor diesem Hintergrund besteht die Aufgabe der Erfindung darin, eine Vorrichtung, eine Presse und ein Verfahren anzugeben, mit denen unter Berücksichtung wirtschaftlicher Belange Formteile herstellbar sind, die selbst höchsten Anforderungen hinsichtlich Funktion, chemischer Beständigkeit und dergleichen genügen.

Diese Aufgabe wird durch eine Vorrichtung mit den Merkmalen des Anspruchs 1, einer Presse mit den Merkmalen des Anspruchs 14 sowie einem Verfahren mit den Merkmalen des Anspruchs 15 gelöst.

Vorteilhafte Weiterbildungen ergeben sich aus den Unteransprüchen.

Der Erfindung liegt unter anderem der Gedanke zugrunde, das Absenken der Druckstifte einer erfindungsgemäßen Vorrichtung zweistufig auszuführen, wobei in einem ersten Schritt die Druckstifte aus einer ersten Position nur soweit auf die mit Teilen bestückte Wechselplatte abgesenkt werden, bis eine Zwischenposition erreicht ist, in der die Teile in oder auf der Wechselplatte eine Lagesicherung durch die Druckstifte erfahren. In dieser Zwischenposition nehmen die Druckstifte gegenüber den Teilen eine Lage ein, bei der die Druckstifte einen minimalen Abstand zu den Teilen einhalten oder mit Kontakt an den Teilen anliegen, ohne dabei eine nennenswerte Kraft auf die Teile auszuüben. Die Teile sind dabei bis zum Erreichen der Zwischenposition in Durchgangsöffnungen in der Wechselplatte eingelegt bzw. auf die Durchgangsöffnungen aufgelegt, die auf diese Weise Aufnahmen für die Teile bilden.

Nach dem Umsetzen der Vorrichtung in die Presse werden die Druckstifte weiter abgesenkt bis eine zweite Position erreicht ist, in der die Druckstifte die Durchgangsöffnungen durchdringen. In diesem Zug werden die Teile aus der Wechselplatte gedrückt und in die Kavitäten eines Formwerkzeugs eingelegt. Das hat den großen Vorteil, dass die Teile beim Hantieren mit der erfindungsgemäßen Vorrichtung nicht auf der Wechselplatte verrutschen oder von der Wechselplatte fallen können. Dadurch bedingte Störungen im Betriebsablauf werden vermieden, so dass der erfindungsgemäße Herstellungsprozess reibungsloser, effizienter und wirtschaftlicher abläuft als bisher möglich.

Die erzielte Lagesicherung der Teile in Sollposition nach dem ersten Absenken der Druckstifte führt ferner dazu, dass sich die Lage der Teile nicht mehr ändert und sich die Teile daher mit hoher Präzision in die Kavitäten einlegen lassen. Die Qualität der erfindungsgemäß hergestellten Formteile hinsichtlich Form und Funktion verbessert sich dadurch erheblich mit dem weiteren Vorteil, dass der Anteil an Ausschuss verschwindend gering ist. Im Ergebnis lassen sich Dank der Erfindung qualitativ hochwertige Formteile äußerst wirtschaftlich herstellen.

Vorzugsweise umfasst der Antrieb zum Absenken der Druckplatte mit den Druckstiften eine Absenkeinrichtung mit einem oder mehreren Aktoren, beispielsweise hydraulische und/oder pneumatische Zylinderkolbeneinheiten und/oder elektromechanische Aktoren wie zum Beispiel Spindeltriebe und dergleichen, die in einer einfachen Ausführungsform der Erfindung durch geeignete Ansteuerung der Aktoren den von ihnen ausgeführten Stellweg und damit die Absenkbewegung unterbrechen, sobald die Druckplatte die Zwischenposition erreicht hat.

In einer bevorzugten Ausführungsform der Erfindung ist der mindestens eine Aktor von zwei Zylinderkolbeneinheiten gebildet, die funktional derart in Reihe geschaltet sind, dass die eine Zylinderkolbeneinheit den Absenkvorgang von der ersten Position der Druckplatte bis zur Zwischenposition bewirkt und die andere Zylinderkolbeneinheit den Absenkvorgang von der Zwischenposition bis zu zweiten Position. Beispielsweise können zu diesem Zweck zwei Zylinderkolbeneinheiten so gekoppelt sein, dass sich deren Kolbenhübe summieren, wobei der Kolbenhub der einen Zylinderkolbeneinheit den ersten Absenkvorgang besorgt und der Kolbenhub der anderen Zylinderkolbeneinheit den zweiten Absenkvorgang. Auf diese Weise kann die Druckplatte mit den Druckstiften schnell, exakt und zuverlässig in die Zwischenposition gebracht werden.

In vorteilhafter Weiterbildung der Erfindung umfasst die Absenkeinrichtung zum Absenken bzw. Anheben der Druckplatte mindestens eine, vorzugsweise mehrere Druckmodule, wobei ein Druckmodul eine in Absenkrichtung verschiebliche Schubstange aufweist, deren eines Ende kraftschlüssig mit der Druckplatte verbunden ist und deren anderes Ende in einer einfachen Ausführungsform unmittelbar an den Aktor anschließt und von diesem betätigt wird. Bei dieser Ausführungsform kann die Schubstange auch unmittelbar von der Kolbenstange einer Zylinderkolbeneinheit oder einer Spindel eines Spindeltriebs gebildet sein.

Bei einer weiteren Ausführungsform der Erfindung wirkt der Aktor zur Betätigung der Absenkeinrichtung auf den einen Hebelarm eines drehbar gelagerten Kipphebels ein, dessen anderer Hebelarm die Schubstange im Zuge der Drehbewegung betätigt. Durch die radialverschiebliche Anlenkung der Schubstange am anderen Hebel ergeben sich bei der Umwandlung der Drehbewegung des Kipphebels in eine Linearbewegung der Schubstange kinematische Abhängigkeiten, die zu einem schnellen Absenken der Druckplatte bis in die Zwischenposition führen und zu einem Zunehmen der Absenkkraft beim Absenken der Druckplatte von der Zwischenposition in die zweite Position während des Ausdrückens der Teile aus der Wechselplatte bzw. Eindrückens der Teile in die Kavitäten des Formwerkzeugs.

In vorteilhafter Weiterbildung der Erfindung umfasst die Absenkeinrichtung mehrere Druckmodule, deren Bewegung beim Absenken der Druckplatte synchronisiert ist, um ein gleichmäßiges Absenken der Druckplatte über die Fläche und damit gleichmäßiges Absenken der Druckstifte auf die Wechselplatte zu erreichen. Geeignete Synchronisationsmittel im Sinne der Erfindung können beispielsweise drehbar gelagerte Wellen sein, wobei die Kipphebel zweier Druckmodule drehfest auf derselben Welle sitzen. Mehrere Wellen können über einseitige Hebel und daran angelenkte Stäbe synchronisiert werden. Vorzugsweise ist jedem Eckbereich der Druckplatte ein Druckmodul zugeordnet, die jeweils paarweise über eine gemeinsame Welle angetrieben und synchronisiert sind. Die Synchronisation der beiden Druckmodulpaare erfolgt dann durch eine Bewegungskoppelung der beiden Wellen.

Die Druckstifte können gemäß der Erfindung unmittelbar an der Druckplatte befestigt sein. Um jedoch eine Anpassung der Druckplatte an unterschiedliche Wechselplatten mit unterschiedlichem Raster der Durchgangsöffnung vornehmen zu können, sind die Druckstifte bei einer bevorzugten Ausführungsform auf Trägerplatten montiert, die lösbar und austauschbar an der Druckplatte befestigbar sind. Auf diese Weise können unterschiedliche Trägerplatten vorgehalten, in Abhängigkeit der eingesetzten Wechselplatte ausgewählt und in die Druckplatte eingesetzt werden, was eine erfindungsgemäße Vorrichtung mit Blick auf deren Einsatzbereich äußerst variabel macht. Vorzugsweise entsprechen die Trägerplatten in Anzahl, Form und Größe den Wechselplatten.

Die exakte Positionierung der mit Teilen bestückten Wechselplatten über den Kavitäten des Formwerkzeugs wirkt sich unmittelbar auf die Qualität der herzustellenden Formteile aus. In diesem Zusammenhang besitzt eine vorteilhafte Ausführungsform der Erfindung Stützelemente, die beim Absetzen der Vorrichtung in Bohrungen an der Presse bzw. des Formwerkzeugs eingreifen. Durch radiales Aufspreizen von Spreizelementen innerhalb der Bohrung findet eine Fixierung und Zentrierung der Vorrichtung gegenüber der Presse statt.

Die Zentrierung der Wechselplatte gegenüber dem Formwerkzeug kann auch über mindestens zwei Zentrierzapfen erfolgen, die aus der Unterseite der Wechselplatte hervorstehen und beim Absenken der Vorrichtung in Passbohrungen am Formwerkzeug eingreifen. Um beim Absenkvorgang eine Ausdehnung der mit Temperatur beaufschlagten Vorrichtungskomponenten zu berücksichtigen, ist in vorteilhafter Weiterbildung der Erfindung vorgesehen, dass die mindestens zwei, vorzugsweise mindestens drei Zentrierzapfen zudem aus der Oberseite der Wechselplatte hervorragen und in Öffnungen in der Druckplatte bzw. Trägerplatte hineinreichen. Die Öffnungen sind dabei jeweils als Langloch ausgebildet, so dass eine Relativbewegung zwischen Zentrierzapfen und Druckplatte bzw. Trägerplatte in Richtung des Langlochs möglich ist. Die Längserstreckungsrichtung eines Langlochs weist dabei zur Mitte der Druckplatte bzw. Trägerplatte, so dass Längenänderungen infolge Temperaturänderungen ausgehend von der Mitte gleichmäßig in alle Richtungen erfolgen, was die Präzision erhöht, mit der die Druckstifte über den Durchgangsöffnungen der Wechselplatte zentriert werden.

Dem vergleichbar können sich in vorteilhafter Weiterbildung der Erfindung die mindestens zwei, vorzugsweise mindestens drei Zentrierzapfen auch durch Langlöcher in der Wechselplatte hindurcherstrecken, deren Längserstreckungsrichtung wie beschrieben jeweils zur Mitte einer Wechselplatte weist. Durch die Anordnung mindestens zweier, vorzugsweise mindestens dreier solcher Zentrierzapfen und Langlöcher je Wechselplatte kann beim Auflegen der Wechselplatte auf ein beheiztes Formwerkzeug eine in der Fläche der Wechselplatte gleichmäßige Ausdehnung erzielt werden.

Ohne sich darauf einzuschränken wird die Erfindung nachfolgend anhand eines in den Zeichnungen dargestellten Ausführungsbeispiels näher erläutert, wobei weitere Merkmale und Vorteile der Erfindung offenbar werden. Das Ausführungsbeispiel betrifft die Herstellung von Elastomerpfropfen mit PTFE-Beschichtung als Verschluss für Arzneimittelampullen. Andere Materialpaarungen aus Elastomeren, Kunststoffen, Metallen und dergleichen liegen ebenso im Rahmen der Erfindung.

### Kurze Beschreibung der Zeichnungen

Es zeigt
- Fig. 1: eine Schrägansicht auf eine erfindungsgemäße Vorrichtung ohne Wechselplatten,
- Fig. 2: einen Schnitt durch die in Fig. 1 dargestellte Vorrichtung in xz-Ebene entlang der in Fig. 3 dargestellten Linie II - II mit der Druckplatte in der oberen ersten Position,
- Fig. 3: einen Schnitt durch die in Fig. 1 dargestellte Vorrichtung in yz-Ebene entlang der in Fig. 2 dargestellten Linie III - III mit der Druckplatte in der oberen ersten Position,
- Fig. 4: eine Schnitt durch die in Fig. 1 dargestellte Vorrichtung in yz-Ebene entlang der in Fig. 2 dargestellten Linie IV - IV mit der Druckplatte in der Zwischenposition, und
- Fig. 5: eine Schnitt durch die in Fig. 1 dargestellte Vorrichtung in yz-Ebene entlang der in Fig. 2 dargestellten Linie V - V mit der Druckplatte in der unteren zweiten Position.

### Beschreibung der Ausführungsformen

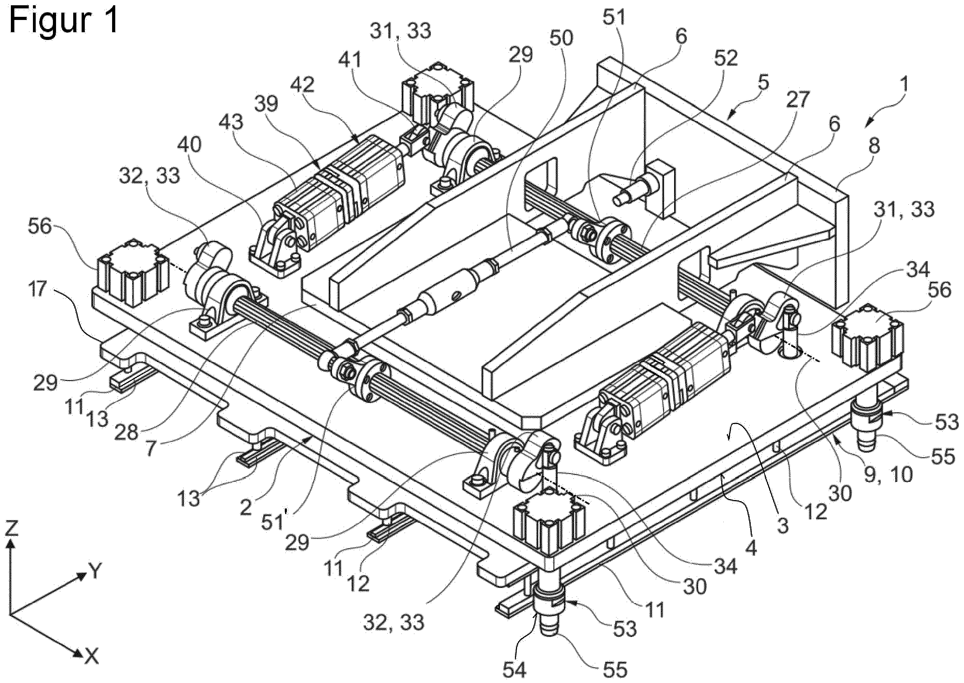

Fig. 1 gibt einen Überblick über den grundsätzlichen Aufbau einer erfindungsgemäßen Vorrichtung 1 ohne Darstellung der Wechselplatten 14. Die tragende Struktur der Vorrichtung 1 umfasst ein plattenartiges, im Betrieb der Vorrichtung 1 etwa horizontal ausgerichtetes Tragelement 2 mit einer planen Oberseite 3 und dazu parallel verlaufender Unterseite 4, sowie einen Halter 5 zur Befestigung der Vorrichtung 1 an einer nicht weiter dargestellten Presse, eines kollaborativen Roboters, Manipulators oder dergleichen. Der Halter 5 besitzt zwei parallele Haltearme 6, die sich mit ihren Enden in den zentralen Bereich des Tragelements 1 erstrecken und dort zusammen eine rechteckförmige Montageplatte 7 tragen, die wiederum kraftschlüssig mit der Oberseite 3 des Tragelements 2 verbunden ist. Die gegenüberliegenden Enden der Haltearme 6 führen zu einer gemeinsamen Anschlussplatte 8, die zur Befestigung der Vorrichtung 1 dient.

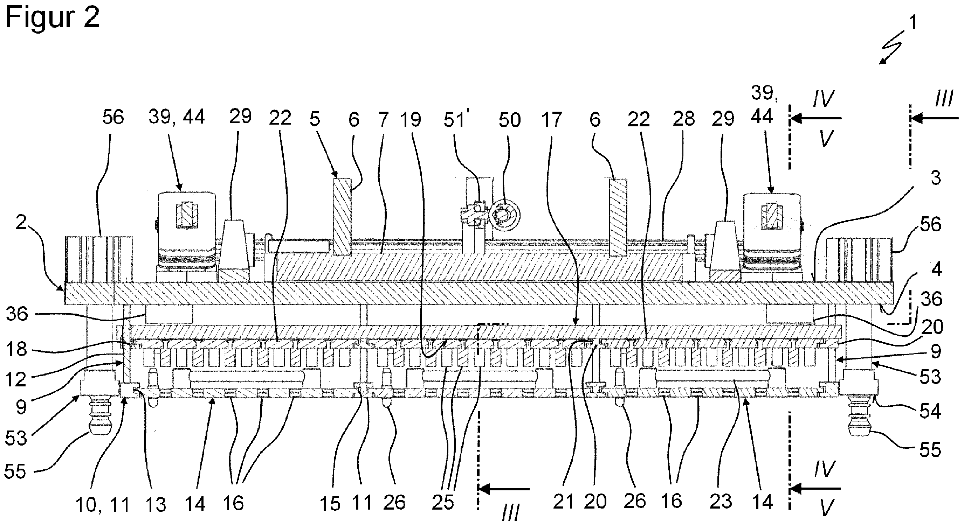

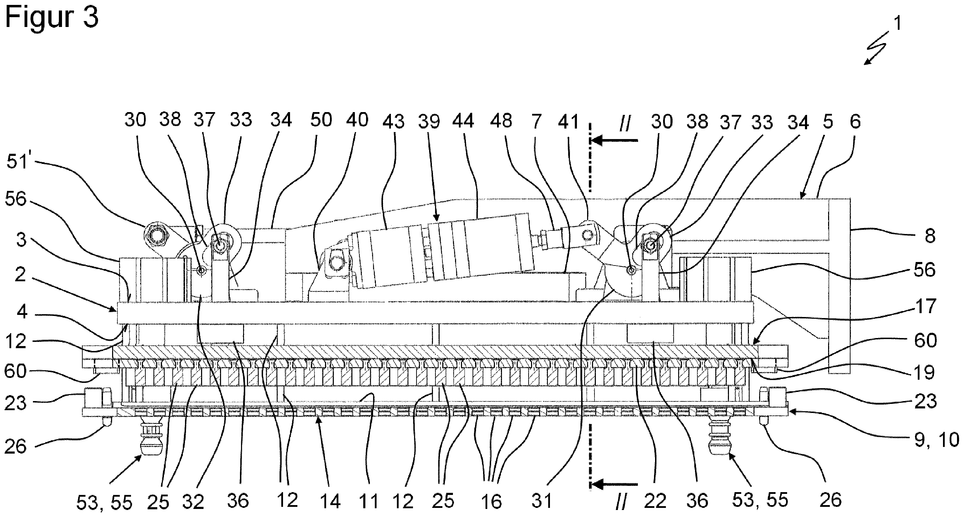

Wie insbesondere aus den Fig. 2 und 3 hervorgeht besitzt die erfindungsgemäße Vorrichtung 1 zudem eine Halteeinrichtung 9, die im lichten Abstand zur Unterseite 4 des Tragelements 2 in planparalleler Lage dazu angeordnet ist. Die Halteeinrichtung 9 besteht im Wesentlichen aus einem Tragrahmen 10 mit in gegenseitigem Abstand in y-Richtung verlaufenden Tragprofilen 11, die über ihre Länge jeweils mittels mehrerer vertikaler Stäbe 12 am Tragelement 2 aufgehängt sind. An den einander zugewandten Längsseiten besitzen die Tragprofile 11 jeweils eine Längsnut 13, wobei ein Paar gegenüberliegender Längsnuten 13 eine Aufnahme und Führung zum Einschieben von Wechselplatten 14 bilden, was nachfolgend noch genauer beschrieben wird. Der Tragrahmen 10 besitzt zudem ein Querprofil, das die Tragprofile 11 an ihrem der Anschlussplatte 8 zugewandten Ende miteinander verbindet und das einen Anschlag für die Wechselplatten 14 zur Begrenzung der Einstecktiefe bildet.

Im vorliegenden Ausführungsbeispiel umfasst der Tragrahmen 10 der Vorrichtung 1 vier parallele Tragprofile 11, die in einheitlichen Abstand zueinander über die gesamte Breite in x-Richtung verteilt sind und zwischen sich drei gleiche Wechselplatten 14 aufnehmen. Die Wechselplatten 14 sind dabei schwimmend mit Spiel im Tragrahmen 10 gelagert.

Jede Wechselplatte 14 besitzt rechteckförmige Gestalt, wobei entlang deren Längsränder ein leistenförmiger Ansatz 15 vorhanden ist, der beim Einschieben einer Wechselplatte 14 in die Halteeinrichtung 9 in die Längsnut 13 eingreift. Über ihre Fläche ist eine Wechselplatte 14 mit einer Vielzahl von Durchgangsöffnungen 16 ausgestattet, die über ihre Tiefe zylindrisch, konisch, stufig oder dergleichen ausgebildet sein können und jeweils eine Aufnahme für ein in die Form eines Formwerkzeugs einzulegendes Teil bilden.

An zwei sich gegenüberliegenden Eckbereichen ist jede Wechselplatte 14 jeweils von einem starren Zentrierzapfen 26 durchdrungen, der nach oben und unten einen Überstand über die Wechselplatte 14 ausbildet. Mit seinem unteren Überstand greift der Zentrierzapfen 26 beim Absetzen der Vorrichtung 1 auf ein Formwerkzeug 57 in dort vorhandene Passbohrungen, um eine Zentrierung der Wechselplatte 14 gegenüber dem Formwerkzeug 57 zu erreichen. Zur besseren Handhabung ist jede Wechselplatte 14 an ihren beiden schmalen Rändern jeweils mit einem Griff 23 ausgestattet.

Die Vorrichtung 1 umfasst ferner eine Druckplatte 17, die in dem Bereich zwischen der Unterseite 4 des Tragelements 2 und der Halteeinrichtung 9 angeordnet ist. Die Druckplatte 17 besitzt ebenfalls rechteckförmige Gestalt und ist etwa deckungsgleich zur Halteeinrichtung 9 höhenverschieblich an der Vorrichtung 1 gelagert. Zu diesem Zweck besitzt die Druckplatte 17 Durchgangsbohrungen 18, die mit den Stäben 12 der Halteeinrichtung 9 fluchten und von diesen durchsetzt sind. Die Stäbe 12 bilden auf diese Weise vertikale Führungen, entlang derer die Druckplatte 17 auf die Halteeinrichtung 9 mit Wechselplatten 14 absenkbar bzw. von dieser anhebbar ist.

An der Unterseite 19 der Druckplatte 17 sind in deckungsgleicher Lage zu den Tragprofilen 11 des Tragrahmens 10 Profilschienen 20 befestigt, die vergleichbar den Tragprofilen 11 an ihren einander zugewandten Längsränder jeweils eine Längsnut 21 bilden, wodurch Aufnahmen zum Einschieben von Trägerplatten 22 entstehen. Die Trägerplatten 22 entsprechen in ihren Abmessungen im Wesentlichen den Wechselplatten 14 und liegen nach ihrem Einschieben schwimmend mit Spiel zwischen zwei Profilschienen 20, wobei deren Oberseite der Unterseite 19 der Druckplatte 17 zugewandt ist. Randseitige Anschläge sowie federbelastete Fixiermittel halten die Trägerplatten 22 in bestimmungsgemäßer Position gegenüber der Druckplatte 17 und damit innerhalb der Vorrichtung 1.

An ihren den Wechselplatten 14 zugewandten Unterseiten weisen die Trägerplatten 22 eine Vielzahl Druckstifte 25 auf, die sich senkrecht aus der Ebene der Trägerplatten 22 in Richtung der Wechselplatten 14 erstrecken. Dabei entspricht die Anordnung der Druckstifte 25 der Anordnung der Durchgangsöffnungen 16, die Druckstifte 25 fluchten also mit den Durchgangsöffnungen 16 der Wechselplatten 14, so dass beim Absenken der Druckplatte 17, die Druckstifte 25 in die Durchgangsöffnungen 16 eindringen. Um dabei ein gewisses Spiel der Druckstifte 25 in den Durchgangsbohrungen 16 zu ermöglichen, ist der Durchmesser der Druckstifte 25 kleiner als der Durchmesser der Durchgangsbohrungen 16.

Das Absenken der Druckplatte 17 mit Druckstiften 25 auf die Wechselplatten 14 bzw. deren Anheben erfolgt mit Hilfe einer Absenkeinrichtung, deren Antrieb und weitere Komponenten hauptsächlich auf der Oberseite 3 des Tragelements 2 angeordnet sind. Wie aus einer Zusammenschau der Fig. 1 bis 3 erkennbar umfasst die Absenkeinrichtung eine erste Welle 27 und zweite Welle 28, die achsparallel zur x-Achse und in seitlichem Abstand zueinander jeweils in Lagern 29 drehbar um eine Achse 30 gehalten sind. Auf jedem Ende der beiden Wellen 27, 28 und damit in den Eckbereichen des Tragelements 2 sitzt drehfest ein Hebel, im Falle der ersten Welle 27 jeweils ein Kipphebel 31 und im Falle der zweiten Welle 28 jeweils ein einseitiger Hebel 32, die mit ihrem einen Hebelarm 33 jeweils auf eine Schubstange 34 einwirken, die als Teil eines kraftübertragenden Druckmoduls die Bewegung der Druckplatte 17 senkrecht zum Tragelement 2 besorgt.

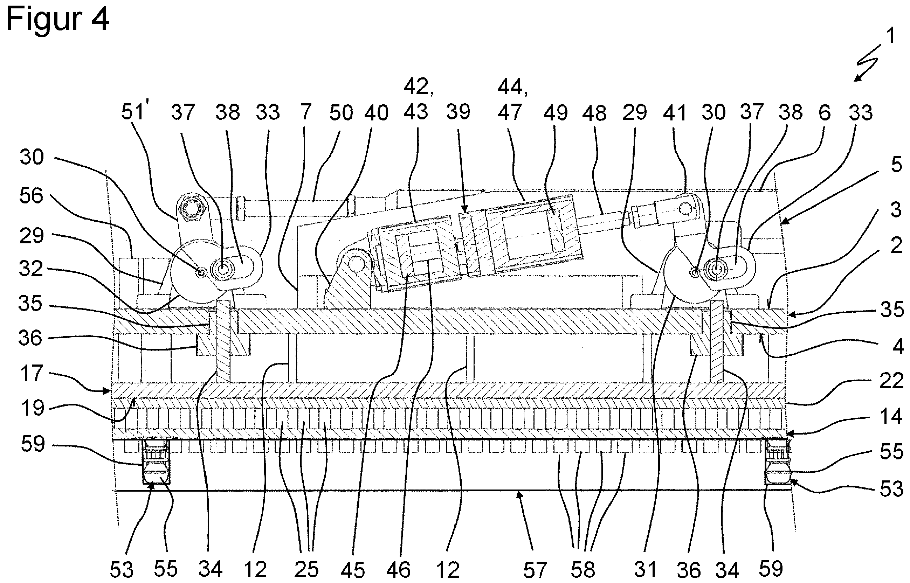

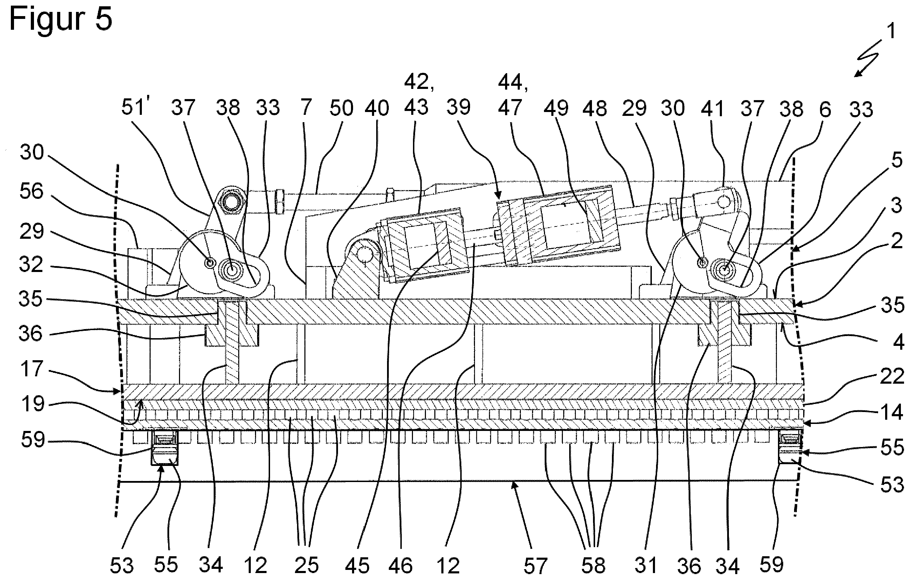

Wie insbesondere aus den Fig. 4 und 5 ersichtlich ist zu diesem Zweck jede Schubstange 34 in einer Lagerbuchse 35 längsverschieblich geführt, die das Tragelement 2 in z-Richtung durchsetzt. Die Lagerbuchse 35 besitzt an der Unterseite 4 des Tragelements 2 einen verbreiterten Fuß 36, der mit seiner planen Unterseite einen oberen Anschlag für die Druckplatte 17 darstellt. Das untere Ende der Schubstange 34 bindet kraftschlüssig in die Druckplatte 17 ein; das obere Ende hingegen ist gelenkig mit dem einen Hebelarm 33 des Kipphebels31 bzw. einseitigen Hebels 32 verbunden, wobei der Gelenkpunkt 37 in einem Radialschlitz 38 im Hebelarm 33 radialverschieblich zur Achse 30 zwangsgeführt ist, um die Drehbewegung des einen Hebelarms 33 um die Achse 30 in eine Linearbewegung der Schubstange 34 in bzw. entgegen der z-Richtung umzuwandeln.

Der Antrieb zum Drehen der ersten Welle 27 um die Achse 30 und damit des Kipphebels 31 umfasst ein Paar Linearaktoren 39, die sich jeweils zwischen einem an der Oberseite 2 des Tragelements 2 befestigten Lagerbock 40 als Festlager und dem anderen Hebelarm 41 des Kipphebels 31 erstrecken. Jeder Linearaktor 39 besteht aus einer ersten Zylinderkolbeneinheit 43 und zweiten Zylinderkolbeneinheit 44, die linear in Reihe angeordnet sind. Im vorliegenden Ausführungsbeispiel bedeutet das, dass der Zylinder 42 der ersten Zylinderkolbeneinheit 43 am Lagerbock 40 angelenkt ist und der bewegliche Kolben 45 der ersten Zylinderkolbeneinheit 43 mit seiner Kolbenstange 46 den Zylinder 47 der zweiten Zylinderkolbeneinheit 44 trägt. Die Kolbenstange 48 des beweglichen Kolbens 49 der zweiten Zylinderkolbeneinheit 44 ist an den zweiten Hebelarm 41 des Kipphebels 31 angelenkt (Fig. 4 und 5).

Zur Übertragung und Synchronisation der Drehbewegung der ersten Welle 27 auf die zweite Welle 28 sitzt drehfest jeweils zwischen den Lagern 29 auf der ersten Welle 27 ein erster einseitiger Hebel 51 und auf der zweiten Welle 28 ein zweiter einseitiger Hebel 51'. An die beiden Hebel 51 schließt ein Zug- und Druckstab 50 mit seinen Enden gelenkig an. Ein Näherungsschalter 52 im Pendelbereich des Zug- und Druckstabs 50 begrenzt die Drehbewegung der Wellen 27, 28.

Zum passgenauen Absetzen der Vorrichtung 1 über der Form einer Presse besitzt die Vorrichtung 1 an jeder Ecke ein vom Tragelement 2 ausgehendes, sich nach unten entgegen der z-Richtung erstreckendes Stützelement 53, dessen verbreiteter Fuß mit seiner planen Unterseite eine höhendefinierte Aufstandsfläche 54 bildet (Fig. 1). In axialer Verlängerung des Stützelements 53 ragt aus der Aufstandfläche 54 ein Spreizelement 55, das bei axialer Stauchung eine über den Umfang gleichmäßige radiale Dehnung erfährt. Die axiale Stauchung des Spreizelements 55 wird über einen im Inneren des Stützelements 53 verlaufenden Betätigungsstab erreicht, der mittels an der Oberseite 2 des Tragelements 2 angeordneter Zylinderkolbeneinheiten 56 gespannt bzw. entspannt werden kann.

Das erfindungsgemäße Verfahren zum Einlegen vorgefertigter Teile in ein Formwerkzeug einer Presse bei der Herstellung von Formteilen mit Hilfe der vorbeschriebenen Vorrichtung 1 wird nachfolgend unter Bezugnahme auf die Fig. 1 bis 5 näher erläutert.

Die erfindungsgemäße Vorrichtung 1 befindet sich zunächst in einer oberen Betriebsstellung wie in den Fig. 1 bis 3 wiedergegeben, in der sich die Druckplatte 17 mit Druckstiften 25 in der oberen ersten Position befindet und die Halteeinrichtung 9 zur Aufnahme der Wechselplatten 14 bereit ist. Die Zylinderkolbeneinheiten 43, 44 der beiden Aktoren 39 befinden sich zu diesem Zeitpunkt im eingefahrenen Zustand (Fig. 1).

In einem nächsten Schritt werden die außerhalb der Vorrichtung 1 mit Teilen bestückten Wechselplatten 14 in die Halteeinrichtung 9 eingelegt, wobei die Durchgangsöffnungen 16 mit darin liegenden Teilen fluchtend mit den Druckstiften 25 zu liegen kommen (Fig. 2 und 3).

Die mittlere Betriebsstellung der Vorrichtung 1 wird erreicht, nachdem durch anschließendes Aktivieren der zweiten Zylinderkolbeneinheit 44 die beiden Kipphebel 31 auf der ersten Welle 27 um einen erstes Maß um die Achse 30 gedreht werden. Über den Zug- und Druckstab 50 wird die Drehbewegung der ersten Welle 27 synchron auf die zweite Welle 28 und im Weiteren auf den einseitigen Hebel 32 übertragen. Kipphebel 31 bzw. einseitiger Hebel 32 drücken dabei die Schubstangen 34 um ein erstes Maß in Richtung entgegen der z-Richtung nach unten, bis die Druckplatte 17 eine Zwischenposition erreicht hat, in der die Druckstifte 25 mit ihren Enden die Teile in den Durchgangsöffnungen 16 in ihrer Lage sichern.

In diesem Zustand wird die Vorrichtung 1 über der Form 57 eines Formwerkzeugs einer nicht weiter dargestellten Presse abgesetzt, was in Fig. 4 gezeigt ist. Man sieht die lediglich vereinfacht dargestellte Form 57 eines Formwerkzeugs mit nach oben offenen Kavitäten 58 sowie Sacklochbohrungen 59. Beim Absetzen der Vorrichtung 1 auf die Form 57 werden die Stützelemente 53 in die Sacklochbohrungen 59 eingeführt bis die Aufstandflächen 54 an Lagerflächen der Form 57 aufliegen. Mit Hilfe der in den Sacklochbohrungen 59 liegenden Spreizelemente 55 wird die Vorrichtung 1 gegenüber der Form 57 zentriert und verankert. Gleichzeitig werden die Zentrierzapfen 26 in Passbohrungen an der Presse bzw. dem Formwerkzeug eingeführt, so dass jede mit einem Teil bestückte Durchgangsöffnung 16 exakt über einer Kavität 58 der Form 57 liegt.

Durch Ausfahren der ersten Zylinderkolbeneinheiten 43 wird die Drehbewegung der ersten Welle 27 und zweiten Welle 28 und damit die Absenkbewegung der Druckplatte 17 fortgesetzt bis die untere zweite Position erreicht ist. In dieser unteren Betriebsstellung der Vorrichtung 1 durchdringen die Druckstifte 25 die Durchgangsöffnungen 16 vollständig und drücken dabei die Teile aus den Durchgangsöffnungen 16 in die Kavitäten 58.

Zur Entnahme der Vorrichtung 1 aus der Presse werden die beschriebenen Schritte in umgekehrter Reihenfolge ausgeführt. Danach befindet sich die Vorrichtung 1 wieder in der oberen Betriebsstellung und steht für einen weiteren Produktionszyklus bereit. Gleichzeitig kann das Formwerkzeug geschlossen und das Formteil in bekannter Art und Weise hergestellt werden.

## Patentansprüche

1. Vorrichtung zum Einlegen vorgefertigter Teile in ein Formwerkzeug einer Presse zur Herstellung von Formteilen, insbesondere zur Herstellung von Elastomerformteilen,
- mit einem Tragelement (2), das zur Befestigung an oder bei der Presse bestimmt ist, wobei das Tragelement (2) eine Oberseite (3) und eine Unterseite (4) besitzt,
- mit einer Halteeinrichtung (9) zur Aufnahme mindestens einer mit den Teilen bestückten Wechselplatte (14), wobei die Halteeinheit (9) am Tragelement (2) im lichten Abstand zu dessen Unterseite (4) angeordnet ist und die Wechselplatte (14) eine Anzahl Durchgangsöffnungen (16) zur Aufnahme der Teile aufweist,
- mit einer Druckplatte (17) mit Druckstiften (25), die zwischen der Unterseite (4) des Tragelements (2) und der Halteeinheit (9) angeordnet ist, wobei die Druckstifte (25) mit den Durchgangsöffnungen (16) fluchten, und
- mit einer Absenkeinrichtung, mittels der die Druckplatte (17) aus einer oberen ersten Position, in der die mit den Durchgangsöffnungen (16) fluchtenden Druckstifte (25) einen lichten Abstand zur mindestens einen Wechselplatte (14) einhalten, in eine zweite untere Position auf die mindestens eine Wechselplatte (14) absenkbar ist, in der die Druckstifte (25) die Durchgangsöffnungen (16) durchdringen, **dadurch gekennzeichnet, dass**
- die Druckplatte (17) in einer Zwischenposition zwischen erster Position und zweiter Position feststellbar ist, und
- in der Zwischenposition die Druckstifte (25) zur Lagesicherung der Teile mit ihren Enden unmittelbar im Bereich der in oder auf die Durchgangsöffnungen (16) gelegten Teile angeordnet sind.

2. Vorrichtung nach Anspruch 1, **dadurch gekennzeichnet, dass** die Absenkeinrichtung zum Absenken der Druckplatte (17) mindestens einen Aktor (39) umfasst, der so angesteuert ist, dass im Zuge der Absenkbewegung die Druckplatte (17) in der Zwischenposition zwischen oberer erster Position und unterer zweiten Position feststellbar ist.

3. Vorrichtung nach Anspruch 2, **dadurch gekennzeichnet, dass** der mindestens eine Aktor (39) eine erste Zylinderkolbeneinheit (43) und eine zweite Zylinderkolbeneinheit (44) besitzt, wobei der Hub der ersten Zylinderkolbeneinheit (43) für das Absenken der Druckplatte (17) aus der oberen ersten Position in die Zwischenposition ursächlich ist, und der Hub der zweiten Zylinderkolbeneinheit (44) für das Absenken der Druckplatte (17) aus der Zwischenposition in die untere zweite Position.

4. Vorrichtung nach Anspruch 3, **dadurch gekennzeichnet, dass** die erste Zylinderkolbeneinheit (43) und zweite Zylinderkolbeneinheit (44) derart gekoppelt sind, so dass sich deren gleichgerichteten Kolbenhübe summieren.

5. Vorrichtung nach einem der Ansprüche 2 bis 4, **dadurch gekennzeichnet, dass** die Absenkeinrichtung mindestens ein Druckmodul umfasst mit einer Schubstange (34), die in dem Tragelement (2) quer zu dessen Unterseite (4) längsverschieblich gelagert und mit ihrem unteren Ende mit der Druckplatte (17) kraftschlüssig verbunden ist, und der mindesten eine Aktor (39) mittelbar oder unmittelbar auf die Schubstange (34) einwirkt.

6. Vorrichtung nach Anspruch 5, **dadurch gekennzeichnet, dass** das mindestens eine Druckmodul einen Kipphebel (31) besitzt, der um eine Drehachse (30) drehbar gelagert ist, wobei der mindestens eine Aktor (39) an den einen Hebelarm (33) des Kipphebels (31) angelenkt ist und das obere Ende der Schubstange (34) an dem anderen Hebelarm (41) des Kipphebels (31).

7. Vorrichtung nach Anspruch 6, **dadurch gekennzeichnet, dass** der Anlenkpunkt (37) der Schubstange (34) am anderen Hebelarm (41) des Kipphebels (31) radialverschieblich zur Drehachse (30) des Kipphebels (31) ausgebildet ist.

8. Vorrichtung nach einem der Ansprüche 5 bis 7, **dadurch gekennzeichnet, dass** die Absenkeinrichtung mindestens zwei voneinander beabstandete Druckmodule umfasst, wobei die beiden Kipphebel (31) der beiden Druckmodule drehfest auf einer gemeinsamen ersten Welle (27) sitzen, die koaxial zur Drehachse (30) verläuft.

9. Vorrichtung nach einem der Ansprüche 5 bis 8, **dadurch gekennzeichnet, dass** die Absenkeinrichtung mindesten zwei weitere Druckmodule umfasst, deren beide Kipphebel (31) drehfest auf einer gemeinsamen zweiten Welle (28) sitzen, die parallel und in seitlichem Abstand zur ersten Welle (27) verläuft, sowie Synchronisationsmittel, mit denen die Drehbewegung der ersten Welle (27) mit der Drehbewegung der zweiten Welle (28) synchronisierbar ist.

10. Vorrichtung nach Anspruch 9, **dadurch gekennzeichnet, dass** die Synchronisationsmittel jeweils einen drehfest auf der ersten Welle (27) sitzenden ersten Hebel (51) und drehfest auf zweiten Wellen (28) sitzenden zweiten Hebel (51') umfassen sowie eine Zug- und Druckstange (50), die die beiden Hebel (51, 51') gelenkig verbindet.

11. Vorrichtung nach einem der Ansprüche 1 bis 10, **dadurch gekennzeichnet, dass** die Druckplatte (17) zur lösbaren Befestigung der Druckstifte (25) mindestens eine Trägerplatte (22) aufweist, an der die Druckstifte (25) angeordnet sind, und die mindestens eine Trägerplatte (22) lösbar an der Druckplatte (17) befestigt ist.

12. Vorrichtung nach einem der Ansprüche 1 bis 11, **dadurch gekennzeichnet, dass** die Vorrichtung (1) mindestens ein Stützelement (53) zum Befestigen und Zentrieren der Vorrichtung (1) in Bohrungen (59) an der Presse aufweist, wobei das mindestens eine Stützelement (53) an seinem unteren Ende ein Spreizelement 55 besitzt, das radial zur Längsachse des mindestens einen Stützelements (53) spreizbar ausgebildet ist.

13. Vorrichtung nach einem der Ansprüche 1 bis 12, **dadurch gekennzeichnet, dass** die Druckplatte (17) und/oder die mindestens eine Trägerplatte (22) und/oder die mindestens eine Wechselplatte (14) mindestens zwei, vorzugsweise mindestens drei voneinander beabstandete Langlöcher (60) aufweisen, in die jeweils ein Zentrierzapfen (26) eingreift, der bei der Zentrierung der Wechselplatte (14) gegenüber dem Formwerkzeug mit Passbohrungen an der Presse bzw. dem Formwerkzeug zusammenwirkt, wobei die Langlöcher (60) jeweils zur Mitte der Druckplatte (17) und/oder zur Mitte der mindestens einen Trägerplatte (22) und/oder zur Mitte der mindestens einen Wechselplatte (14) ausgerichtet sind.

14. Presse zum Herstellen von Formteilen, wobei die Presse ein Formwerkzeug aufweist mit Kavitäten (58), in die im Zuge des Herstellungsprozesses vorgefertigte Teile einlegbar sind, **dadurch gekennzeichnet, dass** die Presse eine Vorrichtung (1) nach einem der Ansprüche 1 bis 13 besitzt.

15. Verfahren zum Einlegen vorgefertigter Teile in ein Formwerkzeug einer Presse zur Herstellung von Formteilen, insbesondere zur Herstellung von Elastomerformteilen, wobei die Teile durch Absenken von Druckstiften (25) in Durchgangsöffnungen (16) einer Wechselplatte (14) aus den Durchgangsöffnungen (16) in das Formwerkzeug gedrückt werden, **gekennzeichnet durch** folgende Schritte:
a. Bestücken einer Wechselplatte (14) mit den Teilen durch Auf- oder Einlegen jeweils eines Teils auf oder in eine Durchgangsöffnung (16) in der Wechselplatte (14),
b. Sicherung der Lage der Teile in den Durchgangsöffnungen (16) durch ein erstes Absenken der Druckstifte (25) auf bzw. an die Teile,
c. Absetzen der Wechselplatte (14) mit den lagegesicherten Teilen auf das Formwerkzeug,
d. Einlegen der Teile in das Formwerkzeug durch ein zweites Absenken der Druckstifte (25) bis die Druckstifte (25) die Durchgangsöffnungen (16) durchdringen.

## Claims

1. Device for inserting prefabricated parts into a mold of a press for the production of molded parts, in particular for the production of elastomer molded parts,
- with a carrying element (2) which is determined for fastening to or at the press, wherein the carrying element (2) has an upper side (3) and a lower side (4),
- with a holding unit (9) for the receptacle of at least one exchangeable plate (14) equipped with the parts, wherein the holding unit (9) is arranged on the carrying element (2) at a clear distance from its underside (4) and the exchangeable plate (14) has a number of through-openings (16) for the receptacle of the parts,
- with a pressure plate (17) with pressure pins (25) arranged between the underside (4) of the carrying element (2) and the holding unit (9), wherein the pressure pins (25) are aligned with the through-openings (16), and
- with a lowering device, by means of which the pressure plate (17) can be lowered from an upper first position, in which the pressure pins (25) aligned with the through-openings (16) maintain a clear distance from the at least one exchange plate (14), into a second lower position on the at least one exchange plate (14), in which the pressure pins (25) penetrate the through-openings (16), **characterized in that**
- the pressure plate (17) is lockable in an intermediate position between the first position and the second position, and
- in the intermediate position, the pressure pins (25) for securing the position of the parts are arranged with their ends directly in the area of the parts placed in or on the through-openings (16).

2. A device according to claim 1, **characterized in that** the lowering device for lowering the pressure plate (17) comprises at least one actuator (39) which is controlled in such a way that in the course of the lowering movement the pressure plate (17) can be fixed in the intermediate position between the upper first position and the lower second position.

3. A device according to claim 2, **characterized in that** the at least one actuator (39) has a first cylinder piston unit (43) and a second cylinder piston unit (44), wherein the stroke of the first cylinder piston unit (43) is causal for lowering the pressure plate (17) from the upper first position to the intermediate position, and the stroke of the second cylinder piston unit (44) is causal for lowering the pressure plate (17) from the intermediate position to the lower second position.

4. A device according to claim 3, **characterized in that** the first cylinder piston unit (43) and second cylinder piston unit (44) are coupled such that their rectified piston strokes add up.

5. A device according to one of the claims 2 to 4, **characterized in that** the lowering device comprises at least one pressure module with a push rod (34), which is mounted in the carrying element (2) so as to be longitudinally displaceable transversely to its underside (4) and is connected with its lower end to the pressure plate (17) in a force-fitting manner, and the at least one actuator (39) acts indirectly or directly on the push rod (34).

6. A device according to claim 5, **characterized in that** at least one pressure module has a rocker arm (31) mounted for rotation about an axis of rotation (30), wherein the at least one actuator (39) is hinged to one lever arm (33) of the rocker arm (31) and the upper end of the push rod (34) is hinged to the other lever arm (41) of the rocker arm (31).

7. A device according to claim 6, **characterized in that** the pivot point (37) of the push rod (34) on the other lever arm (41) of the rocker arm (31) is designed to be radially displaceable relative to the axis of rotation (30) of the rocker arm (31).

8. A device according to any one of claims 5 to 7, **characterized in that** the lowering device comprises at least two spaced-apart pressure modules, wherein the two rocker arms (31) of the two pressure modules are rotationally fixed on a common first shaft (27) that extends coaxially with the axis of rotation (30).

9. A device according to one of the claims 5 to 8, **characterized in that** the lowering device comprises at least two further pressure modules, the two rocker arms (31) of which are seated in a rotationally fixed manner on a common second shaft (28), which extends parallel to and at a lateral distance from the first shaft (27), and synchronization means, by means of which the rotary movement of the first shaft (27) can be synchronized with the rotary movement of the second shaft (28).

10. A device according to claim 9, **characterized in that** said synchronization means respectively comprise a first lever (51) mounted to rotate on the first shaft (27) and a second lever (51') mounted to rotate on second shafts (28), and a push-pull rod (50) hinging the two levers (51, 51').

11. A device according to any one of claims 1 to 10, **characterized in that** the pressure plate (17) has at least one support plate (22) for releasably fastening the pressure pins (25), on which support plate the pressure pins (25) are fastened, and the at least one support plate (22) is releasably fastened to the pressure plate (17).

12. A device according to any one of claims 1 to 11, **characterized in that** the device (1) has at least one fastening support member (53) for fastening and centering the device (1) in bores (59) on the press, wherein the at least one fastening support member (53) has an expanding member 55 at its lower end that is designed to expand radially with respect to the longitudinal axis of the at least one support element (53).

13. A device according to any one of claims 1 to 12, **characterized in that** the pressure plate (17) and/or the at least one carrier plate (22) and/or the at least one exchangeable plate (14) have at least two, preferably at least three elongated holes (60) spaced apart from one another, in each of which engages a centering pin (26) which, when centering the exchangeable plate (14) with respect to the forming tool, cooperates with fitting bores on the press and/or the forming tool, wherein the elongated holes (60) are each aligned with the center of the pressure plate (17) and/or with the center of the at least one support plate (22) and/or with the center of the at least one exchangeable plate (14).

14. A press for the production of molded parts, wherein the press has a mold with cavities (58) into which prefabricated parts can be inserted in the course of the production process, **characterized in that** the press has a device (1) according to one of claims 1 to 13.

15. A method for inserting prefabricated parts into a mold of a press for the production of molded parts, in particular for the production of elastomer molded parts, wherein the parts are pressed out of the through-openings (16) into the mold by lowering pressure pins (25) into through-openings (16) of a changeover plate (14), **characterized by** the following steps:
a. Loading an exchange plate (14) with the parts by placing one part at a time on or in a through-opening (16) in the exchange plate (14),
b. securing the position of the parts in the through-openings (16) by first lowering the pressure pins (25) onto or against the parts,
c. Lowering the exchangeable plate (14) with the position-secured parts onto the forming tool,
d. Inserting the parts into the forming tool by lowering the pressure pins (25) a second time until the pressure pins (25) penetrate the through-openings (16).

## Revendications

1. Dispositif permettant l'insertion de pièces préfabriquées dans un outil de moulage d'une presse pour la production de pièces moulées, en particulier pour la production de pièces moulées en élastomère,
- comportant un élément porteur (2) destiné à être fixé au niveau de la presse ou dans celle-ci, l'élément porteur (2) possédant une face supérieure (3) et une face inférieure (4),
- comportant un appareil de retenue (9) permettant de recevoir au moins une plaque interchangeable (14) équipée des pièces, l'unité de retenue (9) étant disposée au niveau de l'élément porteur (2) à une certaine distance libre de sa face inférieure (4) et la plaque interchangeable (14) présentant un certain nombre d'ouvertures de passage (16) pour la réception des pièces,
- comportant une plaque de pression (17) comportant des tiges de pression (25), laquelle plaque de pression est disposée entre la face inférieure (4) de l'élément porteur (2) et l'unité de retenue (9), les tiges de pression (25) étant alignées avec les ouvertures de passage (16), et
- comportant un appareil d'abaissement au moyen duquel la plaque de pression (17) peut être abaissée d'une première position supérieure, dans laquelle les tiges de pression (25) alignées avec les ouvertures de passage (16) respectent une certaine distance libre par rapport à au moins une plaque interchangeable (14), vers une seconde position inférieure sur l'au moins une plaque interchangeable (14), dans laquelle seconde position inférieure les tiges de pression (25) pénètrent dans les ouvertures de passage (16),
**caractérisé en ce que**
- la plaque de pression (17) peut être bloquée dans une position intermédiaire entre la première position et la seconde position, et
- dans la position intermédiaire, les tiges de pression (25) pour la sécurisation de la position des pièces sont disposées avec leurs extrémités directement dans la zone des pièces placées dans ou sur les ouvertures de passage (16).

2. Dispositif selon la revendication 1, **caractérisé en ce que** l'appareil d'abaissement permettant d'abaisser la plaque de pression (17) comprend au moins un actionneur (39) qui est commandé de sorte que, au cours du mouvement d'abaissement, la plaque de pression (17) peut être bloquée dans la position intermédiaire entre la première position supérieure et la seconde position inférieure.

3. Dispositif selon la revendication 2, **caractérisé en ce que** l'au moins un actionneur (39) possède une première unité de piston de cylindre (43) et une seconde unité de piston de cylindre (44), la course de la première unité de piston de cylindre (43) amenant l'abaissement de la plaque de pression (17) de la première position supérieure vers la position intermédiaire et la course de la seconde unité de piston de cylindre (44) amenant l'abaissement de la plaque de pression (17) de la position intermédiaire vers la seconde position inférieure.

4. Dispositif selon la revendication 3, **caractérisé en ce que** la première unité de piston de cylindre (43) et la seconde unité de piston de cylindre (44) sont accouplées de telle sorte que leurs courses de piston dirigées dans le même sens s'additionnent.

5. Dispositif selon l'une des revendications 2 à 4, **caractérisé en ce que** l'appareil d'abaissement comprend au moins un module de pression comportant une tige de poussée (34) qui est montée dans l'élément porteur (2) de manière à pouvoir coulisser longitudinalement transversalement par rapport à sa face inférieure (4) et est reliée par son extrémité inférieure à la plaque de pression (17) à force, et l'au moins un actionneur (39) agit directement ou indirectement sur la tige de poussée (34).

6. Dispositif selon la revendication 5, **caractérisé en ce que** l'au moins un module de pression possède un levier basculant (31) qui est monté de manière à pouvoir pivoter autour d'un axe de rotation (30), l'au moins un actionneur (39) étant articulé au niveau d'un bras de levier (33) du levier basculant (31) et l'extrémité supérieure de la tige de poussée (34) étant articulée au niveau de l'autre bras de levier (41) du levier basculant (31).

7. Procédé selon la revendication 6, **caractérisé en ce que** le point d'articulation (37) de la tige de poussée (34) au niveau de l'autre bras de levier (41) du levier basculant (31) est conçu de manière à pouvoir coulisser radialement par rapport à l'axe de rotation (30) du levier basculant (31).

8. Dispositif selon l'une des revendications 5 à 7, **caractérisé en ce que** l'appareil d'abaissement comprend au moins deux modules de pression espacés l'un de l'autre, les deux leviers basculants (31) des deux modules de pression reposant de manière solidaire en rotation sur un premier arbre (27) commun qui s'étend de manière coaxiale par rapport à l'axe de rotation (30).

9. Dispositif selon l'une des revendications 5 à 8, **caractérisé en ce que** l'appareil d'abaissement comprend au moins deux autres modules de pression dont les deux leviers basculants (31) reposent de manière solidaire en rotation sur un second arbre (28) commun qui s'étend parallèlement au premier arbre (27) et à une certaine distance latérale de celui-ci, ainsi que des moyens de synchronisation avec lesquels le mouvement de rotation du premier arbre (27) peut être synchronisé avec le mouvement de rotation du second arbre (28).

10. Dispositif selon la revendication 9, **caractérisé en ce que** les moyens de synchronisation comprennent respectivement un premier levier (51) reposant de manière solidaire en rotation sur le premier arbre (27) et un second levier (51') reposant de manière solidaire en rotation sur le second arbre (28) ainsi qu'une barre de traction et de pression (50) qui relie de manière articulée les deux leviers (51, 51').

11. Dispositif selon l'une des revendications 1 à 10, **caractérisé en ce que** la plaque de pression (17) présente au moins une plaque de support (22) pour la fixation amovible des tiges de pression (25), au niveau de laquelle plaque de support sont disposées les tiges de pression (25), et l'au moins une plaque de support (22) est fixée de manière amovible au niveau de la plaque de pression (17).

12. Dispositif selon l'une des revendications 1 à 11, **caractérisé en ce que** le dispositif (1) présente au moins un élément d'appui (53) pour la fixation et le centrage du dispositif (1) dans des alésages (59) au niveau de la presse, l'au moins un élément d'appui (53) possédant, au niveau de son extrémité inférieure, un élément d'écartement 55 qui est conçu de manière à pouvoir s'écarter radialement par rapport à l'axe longitudinal de l'au moins un élément d'appui (53).

13. Dispositif selon l'une des revendications 1 à 12, **caractérisé en ce que** la plaque de pression (17) et/ou l'au moins une plaque de support (22) et/ou l'au moins une plaque interchangeable (14) présentent au moins deux, de préférence au moins trois trous oblongs (60) espacés les uns des autres, dans lesquels respectivement un tourillon de centrage (26) vient en prise, lequel tourillon, lors du centrage de la plaque interchangeable (14) par rapport à l'outil de moulage, coopère avec des alésages d'ajustage au niveau de la presse ou de l'outil de moulage, les trous oblongs (60) étant orientés respectivement vers le centre de la plaque de pression (17) et/ou vers le centre de l'au moins une plaque de support (22) et/ou vers le centre de l'au moins une plaque interchangeable (14).

14. Presse permettant la production de pièces moulées, la presse présentant un outil de moulage comportant des cavités (58) dans lesquelles des pièces préfabriquées peuvent être insérées au cours du processus de production, **caractérisée en ce que** la presse possède un dispositif (1) selon l'une des revendications 1 à 13.

15. Procédé permettant l'insertion de pièces préfabriquées dans un outil de moulage d'une presse permettant la production de pièces moulées, en particulier permettant la production de pièces moulées en élastomère, les pièces étant pressées dans l'outil de moulage par abaissement de tiges de pression (25) dans des ouvertures de passage (16) d'une plaque interchangeable (14) à partir des ouvertures de passage (16), **caractérisé par** les étapes suivantes :
a. équipement d'une plaque interchangeable (14) avec les pièces par pose ou insertion de respectivement une pièce sur ou dans une ouverture de passage (16) dans la plaque interchangeable (14),
b. sécurisation de la position des pièces dans les ouvertures de passage (16) par un premier abaissement des tiges de pression (25) sur les pièces ou au niveau de celles-ci,
c. dépôt de la plaque interchangeable (14) avec les pièces sécurisées dans leur position sur l'outil de moulage,
d. insertion des pièces dans l'outil de moulage par un second abaissement des tiges de pression (25) jusqu'à ce que les tiges de pression (25) pénètrent dans les ouvertures de passage (16).
